# EUROPÄISCHE PATENTANMELDUNG

(11) **EP 1 571 303 A1**
(43) Veröffentlichungstag der Anmeldung: **07.09.2005**
(21) Anmeldenummer: 05002678.0
(22) Anmeldetag: 09.02.2005
(51) Int. Cl.: F01N 3/021, F01N 3/022

(54) **Vorrichtung zum Reinigen von Fahrzeugabgasen, insbesondere Dieselrussfilter**

(30) Priorität: 20.02.2004 DE 102004008415
(71) Anmelder: Arvin Technologies, Inc., Troy, MI 48084-7186 (US)
(72) Erfinder: Noller, Christoph, 86343 Königsbrunn (DE); Kroner, Peter, 86157 Augsburg (DE); Steinhauser, Otto, 86356 Neusäss (DE)
(74) Vertreter: Kitzhofer, Thomas

(57) **Zusammenfassung**

Eine Vorrichtung zum Reinigen von Fahrzeugabgasen, insbesondere ein Dieselrußfilter oder ein Katalysator, haben einen gasdurchströmten Filterkörper (15), der wenigstens abschnittsweise eine in Hauptströmrichtung (A) gesehen eckige Außenkontur hat und im eckigen Abschnitt außenseitig unbearbeitet ist.

## Beschreibung

Die Erfindung betrifft eine Vorrichtung zum Reinigen von Fahrzeugabgasen, insbesondere einen Dieselrußfilter, mit einem gasdurchströmten Filterkörper, der aus mehreren quaderförmigen Einzelkörpern zusammengesetzt ist, und einem den Filterkörper umgebenden Gehäuse.

Solche Filterkörper, auch Monolithkörper oder Substrate genannt, werden üblicherweise durch miteinander verklebte, stranggepreßte, einteilige monolithische Einzelkörper, insbesondere aus SiC-Material zusammengesetzt, wobei diese länglichen Einzelkörper, wie sie auf dem Markt erhältlich sind, einen quadratischen Querschnitt besitzen. Die Filterkörper haben auf einer Stirnseite zahlreiche in einem Sackloch endende, wabenförmig angeordnete, insbesondere im Querschnitt quadratische Einströmkanäle und hierzu benachbarte, nicht unmittelbar strömungsverbundene Ausströmkanäle, die durch ebenfalls wabenförmige, genauer im Querschnitt quadratische, von an der gegenüberliegenden Stirnwand ausgehenden Sacklöcher gebildet werden. Das Abgas strömt von der einströmseitigen Stirnwand in die zahlreichen Einströmkanäle und diffundiert durch die benachbarte Wand zu den Ausströmkanälen, wobei in den Einströmkanälen die Rußpartikel zurückgehalten werden. Abgaskatalysatoren sind entsprechend mit beschichteten einteiligen Einzel-Filterkörpern aufgebaut. Der aus Einzelkörpern zusammengesetzte Filterkörper wird außenseitig mechanisch bearbeitet, insbesondere rundgedreht, was aufgrund der extremen Härte des keramischen Filterkörpers äußerst kostenintensiv ist. Die außenliegenden Einzelkörper, die mechanisch bearbeitet werden, verlieren gegenüber innenliegenden, nicht bearbeiteten Einzelkörpern mit quadratischer Stirnfläche überproportional viel aktive Filteroberfläche. Das heißt, die umfangsmäßig bearbeiteten Einzelkörper verlieren relativ zu den unbearbeiteten Einzelkörpern im Verhältnis wesentlich mehr Filterkapazität als Querschnittsfläche.

Aufgabe der Erfindung ist es, eine Vorrichtung zum Reinigen von Fahrzeugabgasen, insbesondere einen Dieselrußfilter, zu schaffen, die einerseits einen geringeren Herstellungsaufwand hat und andererseits im Vergleich zu den bisherigen Vorrichtungen bezogen auf den Filterquerschnitt einen verbesserten Wirkungsgrad bezüglich seiner Reinigungseigenschaften besitzt. Die Erfindung ist natürlich nicht auf Dieselrußfilter beschränkt. Der Filterkörper kann auch ein Katalysator (z.B. Noₓ-Katalysator) sein, der beschichtet ist.

Dies wird bei einer Vorrichtung der eingangs genannten Art dadurch erreicht, daß der Filterkörper wenigstens abschnittsweise eine in Hauptströmungsrichtung gesehen eckige Außenkontur hat und im eckigen Abschnitt außenseitig unbearbeitet ist. Bei der erfindungsgemäßen Vorrichtung wird der Filterkörper wenigstens abschnittsweise eckig belassen, vorzugsweise sogar vollständig mit der eckigen Außenkontur belassen, die er durch das Zusammensetzen der quaderförmigen Einzelkörper erhält. Dadurch gibt es weniger, vorzugsweise überhaupt keine außenseitig bearbeiteten Einzelkörper, wodurch die aktive Filteroberfläche sehr groß bleibt. Die Rußverteilung/Gasverteilung innerhalb des Filterkörpers ist somit wesentlich gleichmäßiger als bei bearbeiteten Körpern, umgekehrt werden bei gleicher Querschnittsfläche für den Filterkörper weniger Einzelkörper benötigt. Die gleichmäßige Rußbeladung im Filterkörper führt zu einem gleichmäßigen Abbrennverhalten mit unkritischen internen Temperaturen.

Das Gehäuse sollte eine dem Filterkörper folgende Außenkontur aufweisen, bevorzugt mit einem gleichmäßig umlaufenden Spalt. Dieser Spalt ist bevorzugt mehr als drei Millimeter dick, so daß sich ein als thermische Isolierung wirkender Luftspalt ergibt, der aufwendige Isolationsmatten vermeiden kann.

Wie bereits erläutert, sollte der Filterkörper auf dem gesamten Außenumfang (der Außenumfang wird in Strömungsrichtung gesehen und bestimmt die Außenkontur) unbearbeitet sein. Somit kann der Aufwand für die mechanische Bearbeitung des Filterkörpers entfallen.

Gemäß der bevorzugten Ausführungsform hat der Filterkörper, in Hauptströmungsrichtung gesehen, einen gestreckten Querschnitt. Das bedeutet, er hat bevorzugt eine deutlich größere Breite verglichen zu seiner Höhe. Dies soll die Unterbringung unter dem Fahrzeugboden erleichtern und Vorteile gegenüber den bislang üblichen runden Querschnittsformen haben.

Bevorzugte Querschnitte des Filterkörpers in Hauptströmungsrichtung gesehen sind rechteckige Querschnitte, T-, U- oder L-förmige Querschnitte.

Darüber hinaus sieht eine Ausführungsform vor, daß der Filterkörper eine ihn durchsetzende Kammer besitzt, durch die gegebenenfalls andere Fahrzeugteile gelegt werden können.

Die Einzelkörper haben, wie bislang üblich, bevorzugt einen quadratischen Querschnitt und sind stranggepreßte SiC-Substrate.

Eine besondere Schwierigkeit bei der Herstellung der erfindungsgemäßen Vorrichtung mit dem zumindest teilweise im Querschnitt rechteckigen Filterkörper ist die Halterung des Filterkörpers im Gehäuse. Die Erfindung sieht vor, daß der Filterkörper durch eine axiale Klemmung im Gehäuse gelagert sein sollte. Dies hat folgenden Vorteil: das vorzugsweise eckige Gehäuse besitzt in seitlicher oder radialer Richtung im Gegensatz zu einem kreiszylindrischen Rohr nur eine geringe Stabilität gegen Biegung. In axialer Richtung hingegen ist das Gehäuse sehr stabil. Aufgrund der axialen Klemmung wird das Rohr in axialer Richtung (entspricht der Hauptströmungsrichtung) gestreckt. Diese Streckung wirkt einem seitlichen Ausbauchen des Rohres aber entgegen. Das Gehäuse wird also aufgrund der axialen Klemmung seine Außenform trotz der hohen Klemmkraft von vorzugsweise mehr als 1000 Newton, vorzugsweise etwa 5000 Newton, beibehalten.

Der Filterkörper sollte folglich bei sich auf Umgebungstemperatur befindlicher Vorrichtung durch eine im Vergleich zur seitlichen oder radialen Kraft höhere Axialkraft im Gehäuse geklemmt sein.

Bei Erwärmung der Vorrichtung im Fahrbetrieb ist erfindungsgemäß vorgesehen, daß der sich ausdehnende Filterkörper eine im Vergleich zur seitlichen oder radialen Kraft höhere Axialkraft auf das Gehäuse ausübt.

Die Axialkraft sollte gegenüber der seitlichen oder radialen Kraft mehr als das Doppelte, vorzugsweise mehr als Zehnfache betragen. In der bevorzugten Ausführungsform wird axial eine Flächenpressung zwischen dem Filterkörper und dem Gehäuse von 8 Newton pro Quadratmillimeter und radial nur etwa 0,05 Newton pro Quadratmillimeter bei Umgebungstemperatur vorgesehen. Diese extremen Unterschiede erhöhen sich sogar noch im Fahrbetrieb, wenn der Filterkörper erwärmt wird.

Die seitliche Flächenpressung ist eigentlich nur dazu da, eine vorzugsweise vorgesehene seitliche Dichtung zwischen dem Außenumfang des Filterkörpers und dem Gehäuse ausreichend zusammenzudrücken und damit eine Dichtung zu gewährleisten. Die Lagerung in seitlicher Richtung erfolgt indirekt über die axiale Verpressung; die geringen seitlichen Vorspannkräfte sind hier vernachlässigbar.

Zwischen dem stirnseitigen Außenrand des Filterkörpers und dem Gehäuse, vorzugsweise auf beiden Stirnseiten, ist wenigstens ein Dichtkörper vorgesehen, der die gesamte Axialkraft zwischen Filterkörper und Gehäuse überträgt. Der Dichtkörper ist üblicherweise elastisch, so daß Spannungsspitzen vermieden werden und eine gleichmäßige Flächenpressung erreicht wird. Der Dichtkörper hat also eine Doppelfunktion.

Der Dichtkörper ist zum Beispiel ein sich am Außenumfang nahe der Stirnseite erstreckender Dichtring, der wenigstens einen sich vor die Stirnseite erstrekkenden Dichtabschnitt besitzt. Über diesen Dichtabschnitt wird dann die Axialkraft übertragen. Das bedeutet, daß der Dichtkörper in diesem Fall mehrere Funktionen hat: er liegt einerseits seitlich der Kante (Übergang Außenumfang zu Stirnseite) des Filterkörpers an dessen Außenumfang an und dient dort der Dichtung, um Leckageströme im Bereich des Luftspalts zwischen dem Filterkörper und dem Gehäuse nicht aus der Vorrichtung ausströmen zu lassen, andererseits dient sein stirnseitiger Dichtabschnitt der Lagerung des Filterkörpers.

Wenn sich mehrere voneinander umfangsmäßig beabstandete Dichtabschnitte vor die Stirnseite erstrecken und zwischen den Dichtabschnitten der stirnseitige Außenrand des Filterkörpers freiliegt, wird die durch den stirnseitigen Dichtabschnitt abgedeckte Querschnittsfläche, die die wirksame Querschnittsfläche des Filterkörpers verringert, insgesamt deutlich reduziert.

Der Dichtkörper ist vorzugsweise ein mit Dichtmaterial versehener Drahtgestrickring oder, allgemeiner, ein Metallfaserring.

Gegebenenfalls können zwischen den axialen Enden des Monolithkörpes am Außenumfang noch Dichtstreifen, Dichtpaste und/oder eine Isolationsmatte vorgesehen sein.

Eine weitere mit der Erfindung gut kombinierbare Idee besteht darin, endseitige Trichterabschnitte des Gehäuses durch Abkanten herzustellen. Bislang werden die Trichterabschnitte des Gehäuses durch Tiefziehen produziert. Dem Tiefziehen sind aber Grenzen gesetzt, insbesondere wenn der Trichter sehr lang ausgeführt ist und wenn er, wie im vorliegenden Fall, nicht kegelförmig, sondern eckig auszuführen ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht auf eine erfindungsgemäße Vorrichtung zum Reinigen von Fahrzeugabgasen, hier eines Dieselrußfilters,
- Figur 2 eine Längsschnittansicht durch den Dieselrußfilter nach Fig. 1,
- Figur 3 eine Längsschnittansicht durch das stromabwärtige Ende der Vorrichtung,
- Figuren 4 bis 10 stirnseitige Ansichten verschiedener bei der Erfindung einsetzbarer Filterkörper,
- Figur 11 einen Blechzuschnitt zur Herstellung eines Trichterabschnitts des Gehäuses der erfindungsgemäßen Vorrichtung und
- Figur 12 den Trichterabschnitt nach dem Abkanten.

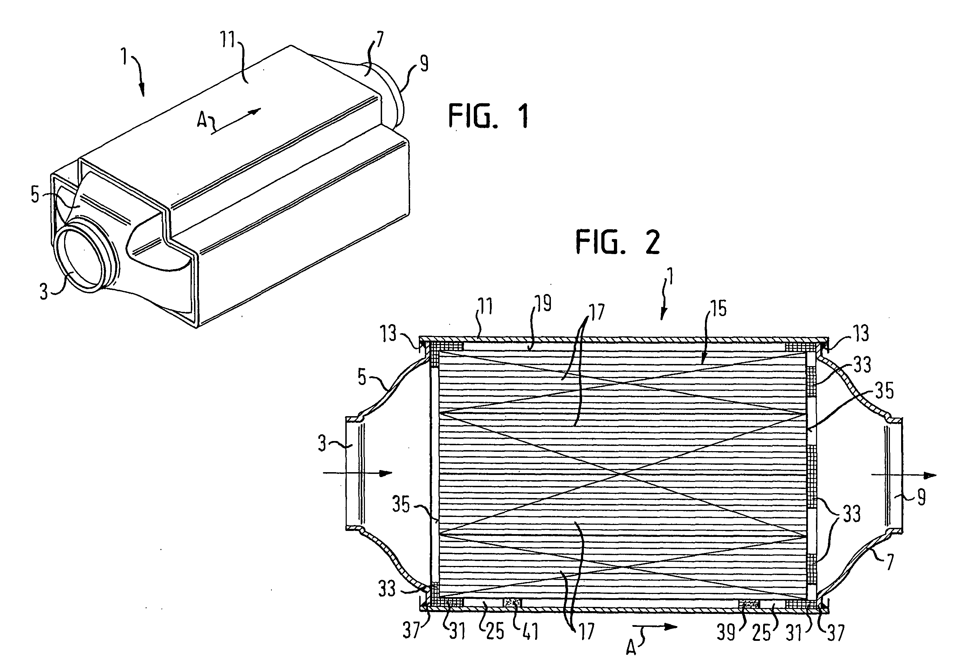

In Fig. 1 ist eine Vorrichtung zum Reinigen von Fahrzeugabgasen dargestellt, die im Abgasstrang des Fahrzeugs liegt. Die gezeigte Vorrichtung ist ein Dieselrußfilter, sie kann jedoch auch entsprechend als Katalysator ausgebildet sein.

Die Vorrichtung hat ein langgestrecktes Gehäuse 1, das aus mehreren Teilen zusammengesetzt ist, nämlich eine mit einer Einströmöffnung 3 versehenen trichterförmigen Abschnitt 5, auf dem entgegengesetzten Ende einem trichterförmigen Abschnitt 7 mit einer Ausströmöffnung 9 sowie einer Umfangswand 11, die durch ein umgeformtes Rohr oder durch Abkanten eines Bleches gebildet ist. Die trichterförmigen Abschnitte 5, 7 sind mit der Umfangswand 11 verschweißt, indem beide trichterförmigen Abschnitte 5, 7 etwas in das Innere der Umfangswand 11 ragen (siehe Fig. 2). Die Schweißnähte tragen das Bezugszeichen 13.

Im Inneren des Gehäuses ist ein Filterkörper 15 untergebracht, der aus mehreren quaderförmigen monolithischen Einzelkörpern 17 zusammengesetzt ist. Die Einzelkörper 17 sind insbesondere stranggepreßte SiC-Körper oder -Substrate, deren Länge der Länge des gesamten Filterkörpers 15 entspricht und die ein stabförmiges Aussehen haben. Die Einzelkörper 17 bestehen insbesondere aus im Querschnitt quadratischen Einzelkörpern, die randflächenseitig mit benachbarten Einzelkörpern 17 verklebt sind.

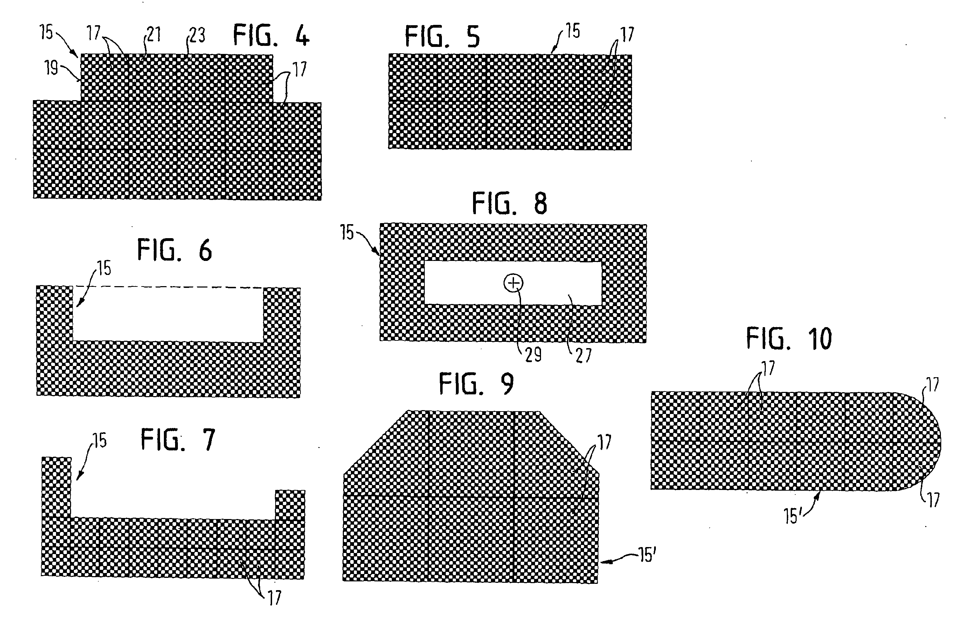

Fig. 4 zeigt eine stirnseitige Ansicht auf den in Fig. 2 gezeigten Filterkörper 15. Wie zu erkennen ist, besteht der Filterkörper 15 aus zahlreichen mit quadratischem Querschnitt versehenen Einzelkörpern 17, die werkseitig mit unbearbeiteter Außenoberfläche zugeliefert werden und nach dem Aneinanderkleben zum Filterkörper 15 umfangsseitig mechanisch (spanend) unbearbeitet bleiben. Das bedeutet, die gesamte sich ergebende eckige Außenkontur des Filterkörpers ist am Außenumfang 19 unbearbeitet.

Die Einzelkörper 17 haben zahlreiche im Querschnitt wabenförmige oder quadratische Einströmkanäle 21, die sich mit im wesentlichen quadratischen Wänden 23 abwechseln, so daß sich eine Art Wabenstruktur oder Schachbrettmuster ergibt. Die Einströmkanäle 21 erstrecken sich tief in die Einzelkörper 17 und enden darin jeweils als Sackloch. Von der gegenüberliegenden Stirnseite aus (Ausströmseite) ragen Ausströmkanäle in die Wände 23 und enden dort ebenfalls als Sacklöcher. Es ergibt sich also auf der gegenüberliegenden Stirnseite eine Ansicht mit einem ähnlichen Waben- oder Schachbrettmuster, nur versetzt zu dem Muster auf der Einströmseite.

Der Filterkörper 15 hat gemäß Fig. 4 einen T-förmigen Querschnitt, die Umfangswand 11 umschreibt dieses "T".

Die effektive Strömungsfläche des gesamten Filterkörpers 15 setzt sich aus der Summe der effektiven Strömungsflächen der Einzelkörper 17 zusammen.

Bei den Ausführungsformen nach den Fig. 5 bis 8 haben sämtliche Filterkörper eine in der Hauptströmungsrichtung A, das heißt auf die dargestellten Stirnseiten gesehen, eine vollständig eckige Außenkontur, die sich durch Aneinanderfügen der quaderförmigen, vorzugsweise quadratischen Einzelkörper 17 ergibt. Auch bei den Ausführungsformen nach den Figuren 5 bis 8 des Filterkörpers sind die Einzelkörper 17 am Außenumfang nicht bearbeitet. Natürlich ist es darüber hinaus auch möglich, rechteckige Querschnitte für die Einzelkörper 17 vorzusehen und diese miteinander zu kombinieren oder rechteckige mit quadratischen Querschnitten.

Bei der Ausführungsform nach Fig. 5 ist ein Filterkörper 15 mit rechteckiger Außenkontur vorgesehen, nach Fig. 6 ein Filterkörper 15 mit U-förmigem Querschnitt, nach Fig. 7 mit U-förmigem Querschnitt jedoch ungleich hohen Seitenschenkeln und nach Fig. 8 mit rechteckigem Außenumfang mit einer im Querschnitt rechteckigen, den Filterkörper durchsetzenden Kammer 27. In dieser Kammer 27 können für die Vorrichtung notwendige Teile, z.B. Sensoren untergebracht sein, oder es kann beispielsweise auch eine Kardanwelle 29 durch die Kammer 27 führen.

Der Filterkörper 15' nach Fig. 9 hat eine trapezförmige Querschnittsfläche mit zwei außenseitig sitzenden Einzelkörpern 17, die eine abgeschrägte Außenkante besitzen. Außer diesen Abschrägungen ist die Außenkontur in den eckigen Abschnitten aber nicht bearbeitet.

Bei der Ausführungsform nach Fig. 10 sind zwei Einzelkörper 17 am rechten Rand durch mechanische Bearbeitung gerundet, die übrigen Einzelkörper 17 haben aber eine unbearbeitete Außenkontur, und zwar nicht nur im Bereich des eckigen Abschnitts auf der linken Seite wie in Fig. 10 gezeigt, sondern auch im Bereich der Ober- und Unterseiten.

Sämtlichen Ausführungsformen nach den Figuren 4 bis 10 ist gemeinsam, daß sie einen horizontal gestreckten Querschnitt besitzen, das heißt eine größere Breite als Höhe aufweisen.

Die Umfangswand 11 des Gehäuses 1 umgibt den in Fig. 4 dargestellten Filterkörper 15 mit einem gleichmäßig breiten Luftspalt 25, der etwas mehr als drei Millimeter Dicke besitzt. Das bedeutet, die Umfangswand 11 folgt dem Filterkörper 15 auf dessen Außenkontur mit gleichmäßigem Abstand.

Die Lagerung des Filterkörpers 15 im Gehäuse 1 erfolgt durch eine axiale Klemmung im Gehäuse 1. Hierzu ist an den axialen Enden des Filterkörpers ein in Umfangsrichtung durchgehender elastischer Dichtkörper in Form eines Drahtgestrickrings 31 angeordnet, der mit Dichtmaterial versehen ist. Dieser Drahtgestrickring 31 hat einen im Längsschnitt L-förmigen Querschnitt mit einem Abschnitt, der seitlich zwischen dem Außenumfang 19 des Filterkörpers 15 und der Innenseite der Umfangswand 11 liegt. Der andere Schenkel des "L" ist ein stirnseitiger Dichtabschnitt 33, der zwischen dem Außenrand der Stirnseite 35 des Filterkörpers 15 und einem ebenen, ringförmigen Flanschabschnitt 37 des trichterförmigen Abschnitts 5, 7, geklemmt ist. Der stirnseitige Dichtabschnitt 33 kann radial geschlossen umlaufen (siehe stromaufwärtige Stirnseite). Am strömabwärtigen trichterförmigen Abschnitt 7 ist eine geringfügig modifizierte Variante des Drahtgestrickrings 31 zu sehen, denn hier sind nur segmentartige stirnseitige Dichtabschnitte 33 vorgesehen, das heißt, die segmentartigen stirnseitigen Dichtabschnitte 33 sind umfangsmäßig voneinander beabstandet, so daß die Stirnseite des Filterkörpers 15 zwischen den stirnseitigen Dichtabschnitten 33 komplett freiliegt. Damit wird der effektive Durchströmquerschnitt des Filterkörpers 15 weniger verringert als bei einem umfangsmäßig durchgehenden stirnseitigen Dichtabschnitt. Natürlich sollte es so sein, daß an den stirnseitigen Enden des Filterkörpers 15 geometrisch gleichgestaltete Drahtgestrickringe 31 vorgesehen sind, das heißt entweder mit einem umfangsmäßig durchgehenden stirnseitigen Dichtabschnitt 33 oder mit segmentartigen, voneinander beabstandeten Dichtabschnitten 33.

Der Filterkörper 15 ist, wie gesagt, axial geklemmt im Gehäuse 1 angeordnet, und zwar unter Zwischenschaltung der stirnseitigen Dichtabschnitte 33 zwischen den Flanschabschnitten 37. Bei Umgebungstemperatur beträgt die axiale Vorspannkraft etwa 5000 Newton. Diese Kraft ist so groß, daß seitlich am Außenumfang keine wirksamen Anschläge vorgesehen sein müssen, die ein seitliches Verschieben des Filterkörpers 15, quer zur Hauptströmungsrichtung A, im Gehäuse 1 verhindern müssten. Zwar liegt seitlich zwischen dem Außenumfang 19 und der Umfangswand 11 der ringförmige Abschnitt des Drahtgestrickrings 31, jedoch sind die Vorspannkräfte in seitlicher Richtung so gering (Flächenpressung ca. 0,05 Newton/Quadratmillimeter), daß eine seitliche Haltefunktion so gut wie vernachlässigt werden kann.

Zusammenfassend heißt dies, daß bei Umgebungstemperatur die Axialkraft oder die stirnseitige Flächenpressung größer als die seitlich auf die Außenkontur 19 ausgeübte Kraft oder Flächenpressung ist. Die axiale Kraft/Flächenpressung sollte mehr als das Doppelte, vorzugsweise mehr als Zehnfache der seitlichen Kraft/Flächenpressung betragen.

Diese Werte sollten auch bei Erwärmung der Vorrichtung auf Betriebstemperatur erfüllt werden. Wichtig ist, daß bei allen Betriebsbedingungen eine ausreichende Haltekraft für den Filterkörper durch die axiale Verspannung vorhanden ist. Beispielsweise könnte sich ein Filterkörper beim schnellen Abkühlen und abnehmender Last schneller zusammenziehen als das Gehäuse. Umgekehrt darf beim schnellen Erwärmen der Filterkörper der axiale Druck auf das Gehäuse nicht zu groß werden. Sollte sich beim schnellen Erwärmen der Filterkörper 15 stärker axial ausdehnen als das Gehäuse 1, so daß bei höherer Betriebstemperatur eine Zugbelastung auf das Gehäuse 1 ausgeübt wird, wird einem seitlichen Deformieren der Umfangswand 11 entgegengewirkt. Der elastische Drahtgestrickring 31 wirkt hierbei wie ein Puffer.

Der umfangsmäßig geschlossene, zwischen der Umfangswand 11 und dem Außenumfang 19 liegende Abschnitt des Drahtgestrickrings 31 dient der Verhinderung von Abgas-Bypaßströmen. Falls der Drahtgestrickring 31 hierzu nicht ausreichend sein sollte, können möglichst nahe an den stirnseitigen Enden des Filterkörpers 15 auch noch Dichtstreifen 39 oder eine Dichtpaste 41 vorgesehen sein, die jeweils umfangsmäßig geschlossen um den Filterkörper 15 herumlaufen.

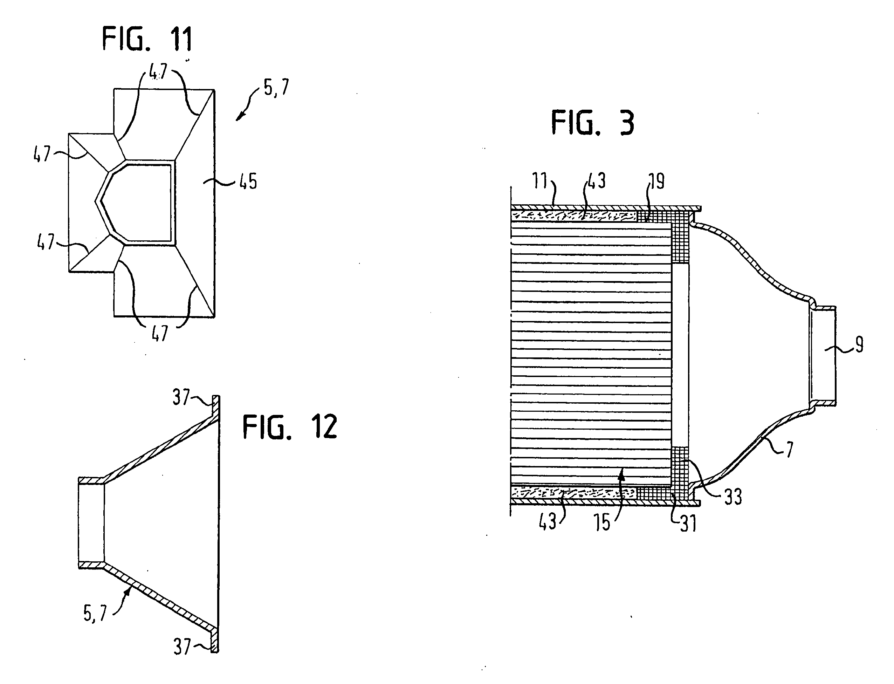

Bei der Ausführungsform nach Fig. 3 ist zur besseren Schalldämpfung eine Isolationsmatte 43 zwischen der Außenkontur 19 und der Umfangswand 11 sowie den an den axialen Enden vorgesehenen Drahtgestrickringen 31 vorgesehen. Über diese Isolierungsmatte 43 wird ebenfalls nur eine sehr geringe seitliche Kraft auf den Filterkörper 15 ausgeübt.

Beim Betrieb der erfindungsgemäßen Vorrichtung strömt Abgas über die Einströmöffnung 3 in Pfeilrichtung in das Innere des Gehäuses 1 und verteilt sich, um über die Einströmkanäle 21 in den Filterkörper 15 einzudringen. Rußpartikel lagern sich am Boden der sacklochartig endenden Einströmkanäle 21 ab. Das Abgas strömt durch die die Einströmkanäle 21 begrenzenden seitlichen Wände, um in die benachbarten Ausströmkanäle zu gelangen und schließlich über die Ausströmöffnung 9 aus der Vorrichtung auszuströmen.

Durch die unbearbeitete eckige Form des Filterkörpers 15 und dessen Lagerung ergibt sich eine sehr große aktive Filteroberfläche, das heißt, der Gegendruckanteil ist sehr niedrig und die Rußverteilung sehr gleichmäßig. Damit wird insgesamt im Vergleich zu außenseitig großflächig bearbeiteten Filterkörpern eine geringe Querschnittsfläche des Filterkörpers 15 ausreichen, um die gleiche Abgasmenge zu filtern, und es können weniger der teuren monolithischen Einzelkörper 17 eingesetzt werden. Die sich ergebende gleichmäßige Rußbeladung des Filterkörpers 15 führt zu einem gleichmäßigen Abbrennverhalten mit unkritischen internen Temperaturen.

Die eckige Form der Umfangsform 11 erfordert außerdem lange, kantige trichterförmige Abschnitte 5, 7. Deren Herstellung kann zum Beispiel durch Stanzen eines Bleches 45 und anschließendes Abkanten (siehe Fign. 11, 12) erfolgen. Mit 47 sind die Abkantlinien bezeichnet. Nach dem Abkanten ergibt sich der trichterförmige Abschnitt 5, 7, der jedoch auf dem Umfang noch längs einer Trennlinie offen ist. Hier werden die entsprechenden Ränder des Bleches verlötet oder verschweißt, bis schließlich der in Fig. 12 gezeigte trichterförmige Abschnitt 5, 7 erzeugt ist.

## Patentansprüche

1. Vorrichtung zum Reinigen von Fahrzeugabgasen, insbesondere Dieselrußfilter, mit
einem gasdurchströmten Filterkörper (15; 15'), der aus mehreren quaderförmigen Einzelkörpern (17) zusammengesetzt ist, und
einem den Filterkörper (15; 15') umgebenden Gehäuse (1),
**dadurch gekennzeichnet, daß**
der Filterkörper (15; 15') wenigstens abschnittsweise eine in Hauptströmungsrichtung (A) gesehen eckige Außenkontur hat und im eckigen Abschnitt außenseitig unbearbeitet ist.

2. Vorrichtung nach Anspruch 1, **dadurch gekennzeichnet, daß** das Gehäuse (1) eine dem Filterkörper (15, 15') folgende Außenkontur aufweist.

3. Vorrichtung nach Anspruch 1 oder 2, **dadurch gekennzeichnet, daß** der Filterkörper (15; 15') eine vollständig eckige Außenkontur besitzt.

4. Vorrichtung nach einem der vorhergehenden Ansprüche, **dadurch gekennzeichnet, daß** der Filterkörper (15) auf seinem gesamten Außenumfang (19) unbearbeitet ist.

5. Vorrichtung nach einem der vorhergehenden Ansprüche, **dadurch gekennzeichnet, daß** der Filterkörper (15; 15') in Hauptströmungsrichtung (A) gesehen einen gestreckten Querschnitt besitzt.

6. Vorrichtung nach einem der vorhergehenden Ansprüche, **dadurch gekennzeichnet, daß** der Filterkörper (15) in Hauptströmungsrichtung (A) gesehen einen T-, U- oder L-förmigen Querschnitt besitzt.

7. Vorrichtung nach einem der vorhergehenden Ansprüche, **dadurch gekennzeichnet, daß** der Filterkörper (15) eine ihn durchsetzende Kammer (27) besitzt.

8. Vorrichtung nach einem der vorhergehenden Ansprüche, **dadurch gekennzeichnet, daß** die Einzelkörper (17) einen quadratischen Querschnitt besitzen.

9. Vorrichtung nach einem der vorhergehenden Ansprüche, **dadurch gekennzeichnet, daß** die Einzelkörper (17) stranggepreßte SiC-Körper sind.

10. Vorrichtung nach einem der vorhergehenden Ansprüche, **dadurch gekennzeichnet, daß** der Filterkörper (15; 15') durch eine axiale Klemmung im Gehäuse (1) gehaltert ist.

11. Vorrichtung nach einem der vorhergehenden Ansprüche, **dadurch gekennzeichnet, daß** der Filterkörper (15; 15') bei sich auf Umgebungstemperatur befindlicher Vorrichtung durch eine im Vergleich zur seitlich auf ihn ausgeübten Kraft höhere Axialkraft im Gehäuse (1) geklemmt ist.

12. Vorrichtung nach einem der vorhergehenden Ansprüche, **dadurch gekennzeichnet, daß** der Filterkörper (15; 15') so im Gehäuse (1) gelagert ist, daß bei Erwärmung der Vorrichtung im Betrieb bei sich ausdehnendem Filterkörper (15; 15') eine im Vergleich zur seitlich auf ihn ausgeübten Kraft hierzu höhere Axialkraft auf ihn einwirkt.

13. Vorrichtung nach Anspruch 11 oder 12, **dadurch gekennzeichnet, daß** die auf den Filterkörper (15; 15') ausgeübte Axialkraft mehr als das Doppelte, vorzugsweise mehr als das Zehnfache, der auf ihn ausgeübten seitlichen Kraft ist.

14. Vorrichtung nach einem der vorhergehenden Ansprüche, **dadurch gekennzeichnet, daß** zwischen dem Außenumfang (19) des Filterkörpers (15; 15') und dem Gehäuse (1) eine seitliche Dichtung vorgesehen ist.

15. Vorrichtung nach einem der vorhergehenden Ansprüche, **dadurch gekennzeichnet, daß** zwischen dem Außenrand der Stirnseite des Filterkörpers (15; 15') und dem Gehäuse (1) wenigstens ein Dichtkörper vorgesehen ist, der die gesamte Axialkraft zwischen Gehäuse (1) und Filterkörper (15; 15') überträgt.

16. Vorrichtung nach Anspruch 14 oder 15, **dadurch gekennzeichnet, daß** der Dichtkörper ein am Außenumfang (19) des Filterkörpers (15; 15') sich nahe seiner Stirnseite erstreckender Dichtring ist, der wenigstens einen sich vor die Stirnseite erstreckenden Dichtabschnitt (33) besitzt.

17. Vorrichtung nach Anspruch 16, **dadurch gekennzeichnet, daß** sich mehrere voneinander umfangsmäßig beabstandete Dichtabschnitte (33) vor die Stirnseite des Filterkörpers (15; 15') erstrecken und zwischen den Dichtabschnitten (33) der stirnseitige Außenrand des Filterkörpers (15; 15') freiliegt.

18. Vorrichtung nach einem der Ansprüche 15 bis 17, **dadurch gekennzeichnet, daß** der Dichtkörper ein mit Dichtmaterial versehener Drahtgestrickring (31) ist.

19. Vorrichtung nach einem der vorhergehenden Ansprüche, **dadurch gekennzeichnet, daß** zwischen den axialen Enden des Filterkörpers (15; 15') an dessen Außenumfang (19) Dichtstreifen (39), eine Dichtpaste (41) und/oder eine Isolationsmatte (43) vorgesehen sind.

20. Vorrichtung nach einem der vorhergehenden Ansprüche, **dadurch gekennzeichnet, daß** das Gehäuse (1) an seinen axialen Enden endseitige Trichterabschnitte (5, 7) hat, die durch Abkanten hergestellt sind.
